# EUROPEAN PATENT SPECIFICATION

(11) **EP 4 080 182 B1**
(45) Date of publication and mention of the grant of the patent: **05.03.2025**
(21) Application number: 21894851.1
(22) Date of filing: 17.09.2021
(51) Int. Cl.: H01R 4/30, G01L 1/04

(54) **SYSTEM AND METHOD FOR MEASURING TERMINAL CONNECTION OR DISCONNECTION AND PRESSURE BY USING PRESSURE SENSOR**
SYSTEM UND VERFAHREN ZUR MESSUNG DES ANSCHLUSSES ODER DER TRENNUNG EINES ENDGERÄTS UND DES DRUCKS UNTER VERWENDUNG EINES DRUCKSENSORS
SYSTÈME ET PROCÉDÉ PERMETTANT DE MESURER UNE CONNEXION OU UNE DÉCONNEXION DE BORNE ET UNE PRESSION EN UTILISANT UN CAPTEUR DE PRESSION

(30) Priority: 20.11.2020 KR 20200156171
(43) Date of publication of application: 26.10.2022
(73) Proprietor: Sreng Co., Ltd., Haeryong-myeon Suncheon-si, Jeollanam-do 58023 (KR)
(72) Inventor: JUNG, Jong Moon, Suncheon-si Jeollanam-do 57974 (KR); LEE, Yong Sik, Suncheon-si Jeollanam-do 57924 (KR)
(74) Representative: Impuls legal
(86) International application number: PCT/KR2021/012760
(87) International publication number: WO 2022/108078

(56) References cited:
- JP-A- 2005 203 144
- JP-A- 2013 057 512
- JP-A- 2017 067 747
- JP-A- 2017 067 747
- JP-B2- 4 699 935
- JP-U- H0 568 073
- KR-A- 940 007 513

## Description

### Technical Field

The present disclosure relates to a system for measuring a coupling force of a pair of terminals for connecting a cable through a pressure sensor to easily determine a coupling state of the cable fixed between the pair of terminals and to keep the coupling state stable. More specifically, the present disclosure relates to a technical field of a system for measuring terminal connection or disconnection and pressure by using a pressure sensor and a method for measuring terminal connection or disconnection and pressure, wherein the pressure sensor is provided at the lower of a pair of terminals and a pressure bolt at the upper terminal is tightened or loosened so as to generate the pressure for maintaining the stable coupling state of the cable fixed between the pair of terminals, and a change in the generated pressure is easily determined and stable pressure is generated by tightening the pressure bolt when a preset pressure is not reached, thereby preventing a fire caused by Joule heating that may occur due to the cable unstably fixed between the pair of terminals.

### Background Art

In general, a terminal board, of which another name is a terminal block, is provided with an input terminal to connect electric wires with a partition wall in between and to carry an electric current, and output terminals are coupled to respective ends of the electric wires to be connected and fixed to the input terminal of the terminal block via a fixing screw so that an electric current is applied.

Document JPH0568073U describes a conductor connection device that interposes a flat washerlike pressure sensor between a bolt and one of the bearing surface of the conductor that allows a coupling bolt to apply pressure in the sensor while maintaining the connection between terminals.

For example, Korean Patent Application Publication No. 10-1999-0034800 discloses a terminal board for connecting an electric wire of one touch type, wherein through an output terminal fixing screw, an output terminal coupled to an end of the electric wire is connected to an input terminal, the input terminal being bent with a central partition wall in the middle and being fixed to a terminal block via an input terminal fixing screw. In the terminal board for connecting the electric wire, an upper moving piece above the input terminal and a lower moving piece below the input terminal are fastened by the output terminal fixing screw and assembled and fixed. In the meantime, an upper spring is provided between the upper moving piece and the input terminal, and also, a lower spring is provided between the lower moving piece and the terminal block. Accordingly, as the output terminal fixing screw pushes, the upper moving piece and the lower moving piece are elastically moved with respect to the input terminal fixed in position.

As another example, Korean Patent No. 10-1142893 discloses an electric wire terminal connection board including: a power distribution board having an upper surface on which a terminal mounting board is formed protruding; a conductive plate coupled to an upper surface of the terminal mounting board, and having an upper part in which a recess is formed so that an electrode terminal is mounted therein; and a cover coupled to an upper part of the conductive plate and fastened covering the electrode terminal.

In this way, in general, a terminal allowing an electric wire to be connected to carry an electric current places an electric wire of which a jacket is removed, namely, a conductor of a cable, between a lower conductive plate and an upper conductive plate, and tightens a fixing screw at the upper conductive plate, thereby maintaining a stable coupling state.

That is, in the terminal, the upper conductive plate is moved in the direction of the lower conductive plate by the clamping force of the fixing screw, and the electric wire, namely, the cable, is thus pressed and fixed. Accordingly, the clamping force of the fixing screw changes the coupling state of the cable, and the stably formed clamping force of the fixing screw achieves the stable coupling state of the cable.

However, there is a phenomenon that an external impact or vibration on the conventional terminal causes the fixing screw to be loosen little by little. Thus, the space between the lower conductive plate and the upper conductive plate is further increased, and the electric wire, namely, the conductor of the cable, is unstably coupled between the upper conductive plate and the lower conductive plate, resulting in a fire caused by Joule heating.

### Disclosure

### Technical Problem

The present disclosure has been made keeping in mind the above problems occurring in the related art, wherein in a terminal for connecting an electric wire, in other words, a cable, a fixing screw is loosened by an external impact, etc. and a contact area between a conductor of the electric wire cable and the terminal is reduced, resulting in a problem of the occurrence of a fire caused by Joule heating, in the related art;

The present disclosure is directed to providing a system for measuring terminal connection or disconnection and pressure by using a pressure sensor and a method for measuring terminal connection or disconnection and pressure, wherein the pressure sensor is provided to measure the pressure between a pair of terminals for fixing and connecting a cable and a clamping force of a coupling bolt is easily determined by using the pressure sensor, so that when the clamping force of the coupling bolt is weakened because of an external impact, etc., it is easy to perform maintenance, thus preventing a fire caused by Joule heating.

### Technical Solution

To achieve the desired objective as described above, the present disclosure provides a system for measuring terminal connection or disconnection and pressure by using a pressure sensor, the system including: a lower terminal through which a first coupling hole is formed on a first side thereof, the first coupling hole corresponding to an installation hole formed in a base frame of an electronic device; the pressure sensor of which a lower part is coupled to an upper part of the lower terminal on a second side thereof; an upper terminal through which a second coupling hole is formed on a first side thereof and a fastening hole is formed on a second side thereof, the second coupling hole corresponding to the first coupling hole and the fastening hole being at a position corresponding to the pressure sensor; a coupling bolt coupled into the installation hole of the base frame by screw-type engagement, passing through the second coupling hole of the upper terminal and the first coupling hole of the lower terminal; and a pressure bolt coupled into the fastening hole of the upper terminal by screw-type engagement, and configured to apply pressure to the pressure sensor.

In addition, the present disclosure may further include: a controller configured to receive pressure information measured from the pressure sensor; and a display configured to receive the pressure information from the controller and display the pressure information.

In addition, the upper terminal of the present disclosure may include: a body through which the second coupling hole corresponding to the first coupling hole is formed; a bent part formed extending on a side of the body and formed in a shape bent upwards in a direction of the side; and a separation part formed extending on a side of the bent part in a direction of the side, and provided with the fastening hole that is formed at the position corresponding to the pressure sensor and through the separation part.

In addition, the upper terminal of the present disclosure may include: a first reinforcing bead formed thereon between the body and the bent part; and a plurality of second reinforcing beads formed starting from a lower surface of the bent part to a lower surface of the separation part.

In addition, the pressure sensor of the present disclosure may include: a lower insulation of which a lower part is coupled to the upper part of the lower terminal on the second side thereof; a sensor positioned on the lower insulation; and an upper insulation coupled above the lower insulation such that a lower surface of the upper insulation is in contact with the sensor.

In addition, in the present disclosure, the lower insulation may be provided with a lower mounting recess in an upper surface thereof, into which a lower part of the sensor is inserted, and the upper insulation may be provided with an upper mounting recess in the lower surface thereof, into which an upper part of the sensor is inserted.

In addition, in the present disclosure, the lower insulation may be provided with a lower mounting recess in an upper surface thereof, into which the sensor is inserted, and the upper insulation may be coupled as a lower part thereof is inserted into the lower mounting recess.

In addition, to achieve the desired objective as described above, the present disclosure provides a method for measuring terminal connection or disconnection and pressure by using a pressure sensor, the method including: a first step in which the lower terminal is positioned on the base frame of the electronic device, the upper terminal is provisionally coupled above the lower terminal by using the coupling bolt, and the pressure bolt is provisionally coupled to the upper terminal; after the first step, a second step in which a conductor of a cable is positioned between the lower terminal and the upper terminal, the coupling bolt is tightened to cause the upper terminal to be in contact with the conductor of the cable such that pressure applied to the conductor of the cable by clamping force of the coupling bolt is 0, and the pressure bolt is tightened to cause a lower part of the pressure bolt to be in contact with an upper part of the pressure sensor such that pressure applied to the pressure sensor is 0; and after the second step, a third step in which the coupling bolt is tightened to fix the conductor of the cable between the lower terminal and the upper terminal, wherein the coupling bolt is tightened such that pressure caused by the pressure bolt measured by the pressure sensor reaches a preset pressure.

### Advantageous Effects

According to the system for measuring terminal connection or disconnection and pressure by using the pressure sensor and the method for measuring terminal connection or disconnection and pressure according to the present disclosure provided as described above, the clamping force of the coupling bolt coupled to a pair of terminals to fix and connect the cable is measured through the pressure sensor and the pressure bolt for pressing the pressure sensor, so that a state of the clamping force of the coupling bolt, specifically, the coupling state of the cable, is easily determined, thus preventing a fire caused by Joule heating from occurring because the clamping force of the coupling bolt is weakened.

In addition, according to the present disclosure, the state of the clamping force of the coupling bolt, that is, the coupling state of the cable through a pair of terminals, can be easily determined, so that when the clamping force of the coupling bolt is weakened, it is easy to perform maintenance for recovering the clamping force of the coupling bolt.

In addition, according to the present disclosure, the clamping force of the coupling bolt, specifically, the pressure applied to the cable by the upper of a pair of terminals, is more easily determined through the controller and the display.

In addition, according to the present disclosure, the pressure sensor is provided, and the pressure bolt is used for generating the pressure corresponding to the clamping force of the coupling bolt by pressing the pressure sensor, thereby facilitating installation.

In addition, according to the present disclosure, a change in the pressure measured by the pressure sensor according to a predetermined rotation angle can be easily determined through a position detection sensor for measuring the rotation angle of the pressure bolt, and accordingly, the coupling bolt is tightened again to a required pressure, whereby the cable can be more easily fixed with a preset clamping force.

### Description of Drawings

FIG. 1 is a block diagram schematically showing a system for measuring terminal connection or disconnection and pressure according to a preferred embodiment of the present disclosure.
FIG. 2 is a perspective view showing a system for measuring terminal connection or disconnection and pressure according to a preferred embodiment of the present disclosure.
FIG. 3 is an exploded perspective view showing a system for measuring terminal connection or disconnection and pressure according to a preferred embodiment of the present disclosure.
FIG. 4 is a side view showing a system for measuring terminal connection or disconnection and pressure according to a preferred embodiment of the present disclosure, wherein a cable has a small diameter.
FIG. 5 is a perspective view showing a system for measuring terminal connection or disconnection and pressure according to a preferred embodiment of the present disclosure, wherein a cable has a large diameter.
FIG. 6 is a side view showing a first step and a second step of a method for measuring terminal connection or disconnection and pressure according to a preferred embodiment of the present disclosure.
FIG. 7 is a side view showing a third step of a method for measuring terminal connection or disconnection and pressure according to a preferred embodiment of the present disclosure.
FIG. 8 is a perspective view (a) and a bottom perspective view (b) showing an upper terminal according to another embodiment of the present disclosure.
FIG. 9 is a cross-sectional view showing a pressure sensor according to a preferred embodiment (a), another embodiment (b), and still another embodiment (c).
FIG. 10 is a flowchart schematically showing a method for measuring terminal connection or disconnection and pressure according to a preferred embodiment of the present disclosure.

### * Detailed Description of Main Reference Numerals in Drawings *

10 : base frame 12 : installation hole
20 : cable 100 : lower terminal
110 : first coupling hole 200 : pressure sensor
210 : lower insulation 212 : lower mounting recess
220 : sensor 230 : upper insulation
232 : upper mounting recess 300 : upper terminal
310 : body 312 : second coupling hole
320 : bent part 330 : separation part
332 : fastening hole 340 : first reinforcing bead
350 : second reinforcing bead 400 : coupling bolt
500 : pressure bolt 600 : controller
700 : display

### Best Mode

The present disclosure relates to a system for measuring a coupling force of a pair of terminals, namely, a lower terminal 100 and an upper terminal 300, for fixing and connecting an electric wire, namely, a cable 20, through a pressure sensor 200 so as to easily determine a coupling state of the cable 20 fixed between the lower terminal 100 and the upper terminal 300 and to maintain a stable coupling state, specifically, keep the coupling force of the lower terminal 100 and the upper terminal 300 stable. More specifically, disclosed is a technology related to a system for measuring terminal connection or disconnection and pressure by using a pressure sensor and to a method for measuring terminal connection or disconnection and pressure, wherein when between the lower terminal 100 and the upper terminal 300 coupled to a base frame 10 of an electronic device through a coupling bolt 400, a conductor covered by the cable 20 is fixed by the compressive force of the upper terminal 300 and is electrically connected, a pressure bolt 500 coupled to the upper terminal 300 by screw-type engagement applies pressure to the pressure sensor 200 provided at the lower terminal 100, so that the compressive force of the upper terminal 300, specifically, the clamping force of the coupling bolt 400 causing the compressive force of the upper terminal 300 is easily determined through the pressure bolt 500 and the pressure sensor 200, thereby preventing a fire caused by Joule heating that may occur because the coupling bolt 400 is loosened as time passes.

In order to achieve the present invention as described above, a system for measuring terminal connection or disconnection and pressure by using a pressure sensor includes: a lower terminal 100 through which a first coupling hole 110 is formed on a first side thereof, the first coupling hole 110 corresponding to an installation hole 12 formed in a base frame 10 of an electronic device; the pressure sensor 200 of which a lower part is coupled to an upper part of the lower terminal 100 on a second side thereof; an upper terminal 300 through which a second coupling hole 312 is formed on a first side thereof and a fastening hole 332 is formed on a second side thereof, the second coupling hole 312 corresponding to the first coupling hole 110 and the fastening hole 332 being at a position corresponding to the pressure sensor 200; a coupling bolt 400 coupled into the installation hole 12 of the base frame 10 by screw-type engagement, passing through the second coupling hole 312 of the upper terminal 300 and the first coupling hole 110 of the lower terminal 100; and a pressure bolt 500 coupled into the fastening hole 332 of the upper terminal 300 by screw-type engagement, and configured to apply pressure to the pressure sensor 200.

In addition, the present disclosure includes: a controller 600 configured to receive pressure information measured from the pressure sensor 200; and a display 700 configured to receive the pressure information from the controller 600 and display the pressure information.

In addition, the upper terminal 300 of the present disclosure includes: a body 310 through which the second coupling hole 312 corresponding to the first coupling hole 110 is formed; a bent part 320 formed extending on a side of the body 310 and formed in a shape bent upwards in a direction of the side; and a separation part 330 formed extending on a side of the bent part 320 in a direction of the side, and provided with the fastening hole 332 that is formed at the position corresponding to the pressure sensor 200 and through the separation part 330.

In addition, the upper terminal 300 of the present disclosure includes: a first reinforcing bead 340 formed thereon between the body 310 and the bent part 320; and a plurality of second reinforcing beads 350 formed starting from a lower surface of the bent part 320 to a lower surface of the separation part 330.

In addition, the pressure sensor 200 of the present disclosure includes: a lower insulation 210 of which a lower part is coupled to the upper part of the lower terminal 100 on the second side thereof; a sensor 220 positioned on the lower insulation 210; and an upper insulation 230 coupled above the lower insulation 210 such that a lower surface of the upper insulation 230 is in contact with the sensor 220.

In addition, in the present disclosure, the lower insulation 210 is provided with a lower mounting recess 212 in an upper surface thereof, into which a lower part of the sensor 220 is inserted, and the upper insulation 230 is provided with an upper mounting recess 232 in the lower surface thereof, into which an upper part of the sensor 220 is inserted.

In addition, in the present disclosure, the lower insulation 210 is provided with a lower mounting recess 212 in an upper surface thereof, into which the sensor 220 is inserted, and the upper insulation 230 is coupled as a lower part thereof is inserted into the lower mounting recess 212.

In order to achieve the present invention as described above, a method for measuring terminal connection or disconnection and pressure by using the pressure sensor includes: a first step in which the lower terminal 100 is positioned on the base frame 10 of the electronic device, the upper terminal 300 is provisionally coupled above the lower terminal 100 by using the coupling bolt 400, and the pressure bolt 500 is provisionally coupled to the upper terminal 300; after the first step, a second step in which a conductor of a cable 20 is positioned between the lower terminal 100 and the upper terminal 300, the coupling bolt 400 is tightened to cause the upper terminal 300 to be in contact with the conductor of the cable 20 such that pressure applied to the conductor of the cable 20 by clamping force of the coupling bolt 400 is 0, and the pressure bolt 500 is tightened to cause a lower part of the pressure bolt 500 to be in contact with an upper part of the pressure sensor 200 such that pressure applied to the pressure sensor 200 is 0; and after the second step, a third step in which the coupling bolt 400 is tightened to fix the conductor of the cable 20 between the lower terminal 100 and the upper terminal 300, wherein the coupling bolt 400 is tightened such that pressure caused by the pressure bolt 500 measured by the pressure sensor 200 reaches a preset pressure.

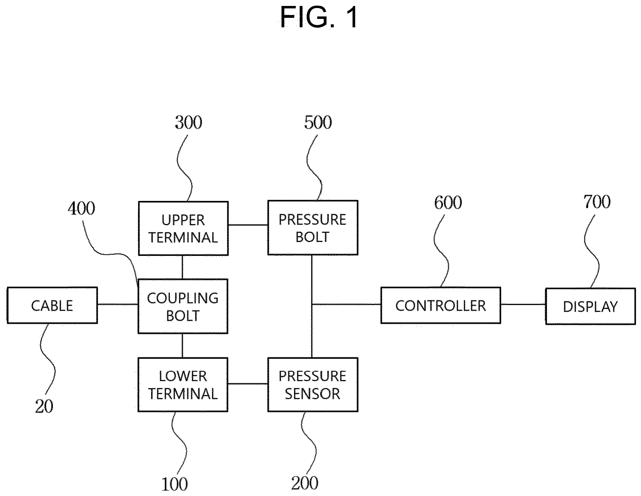

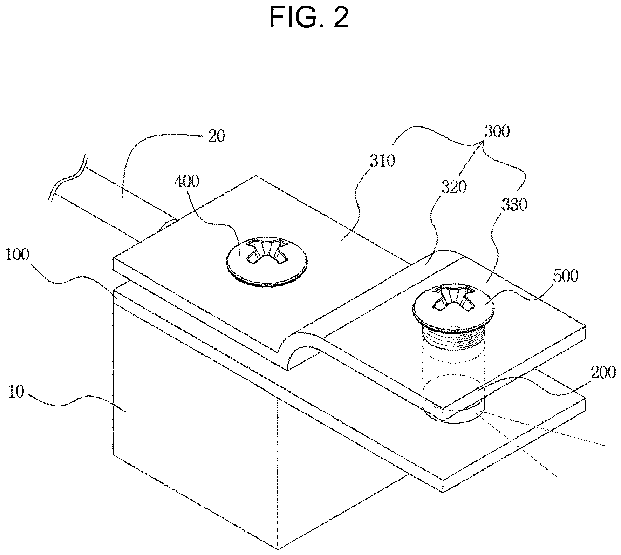

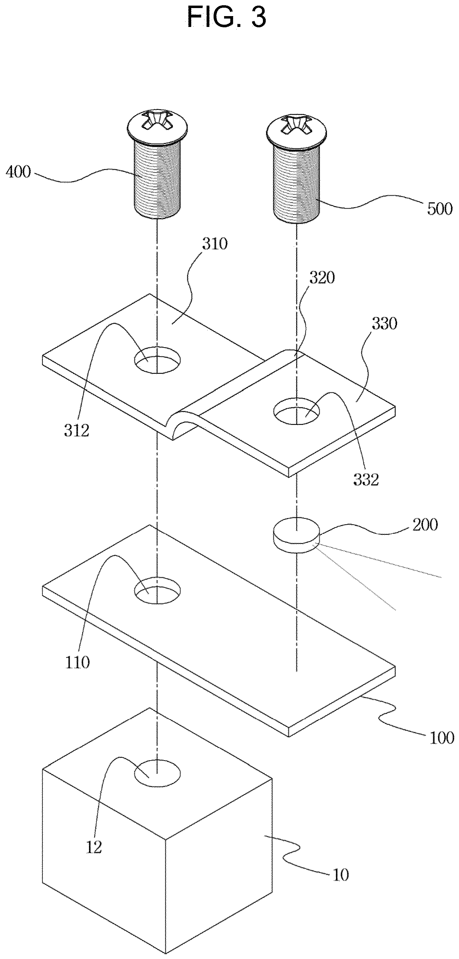

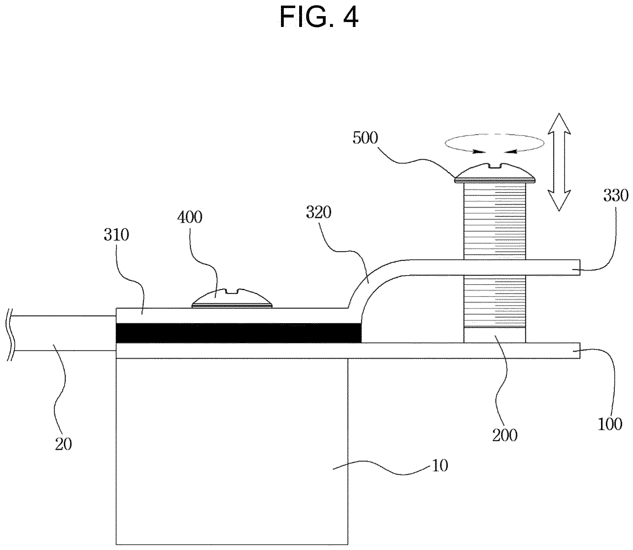

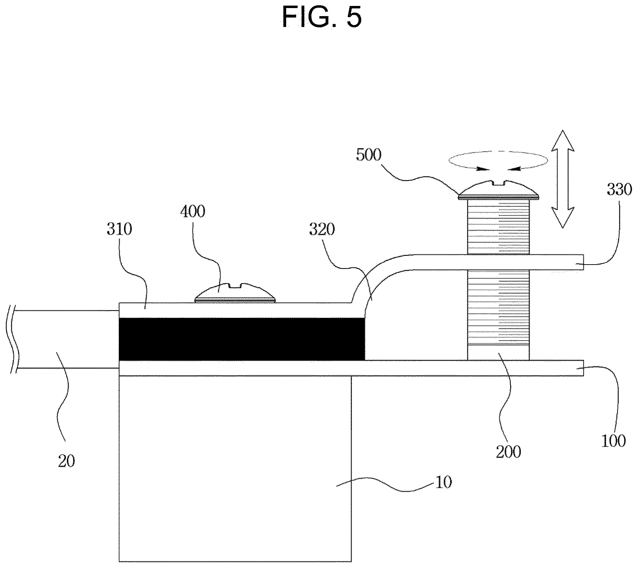

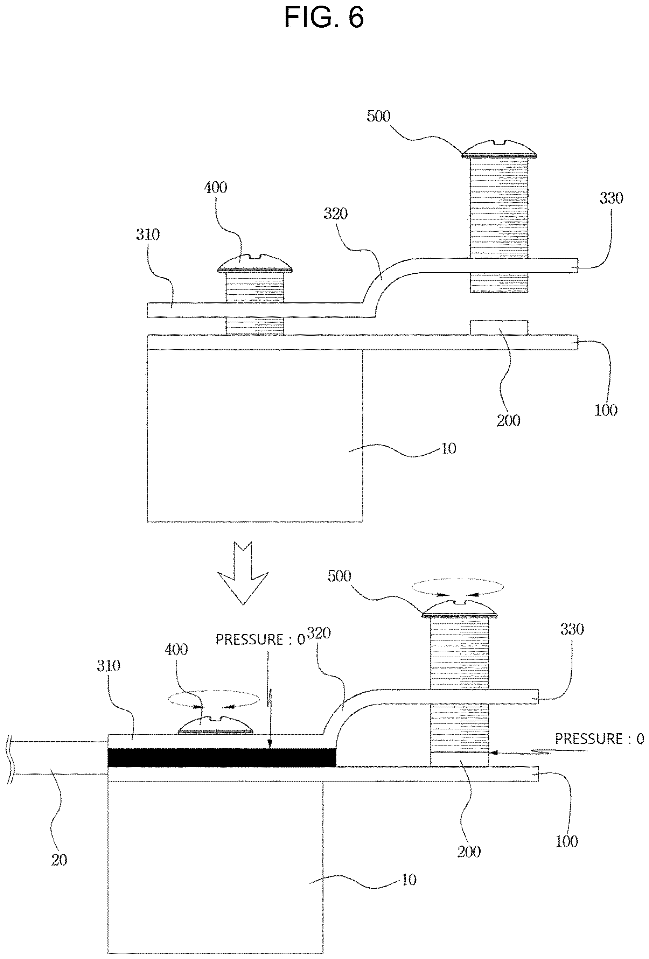

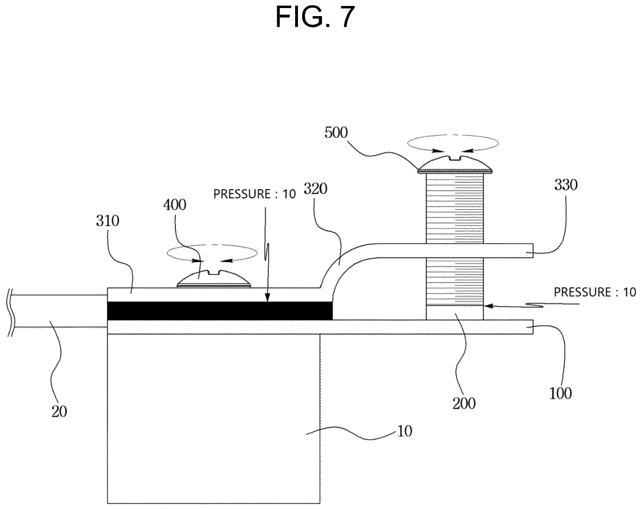

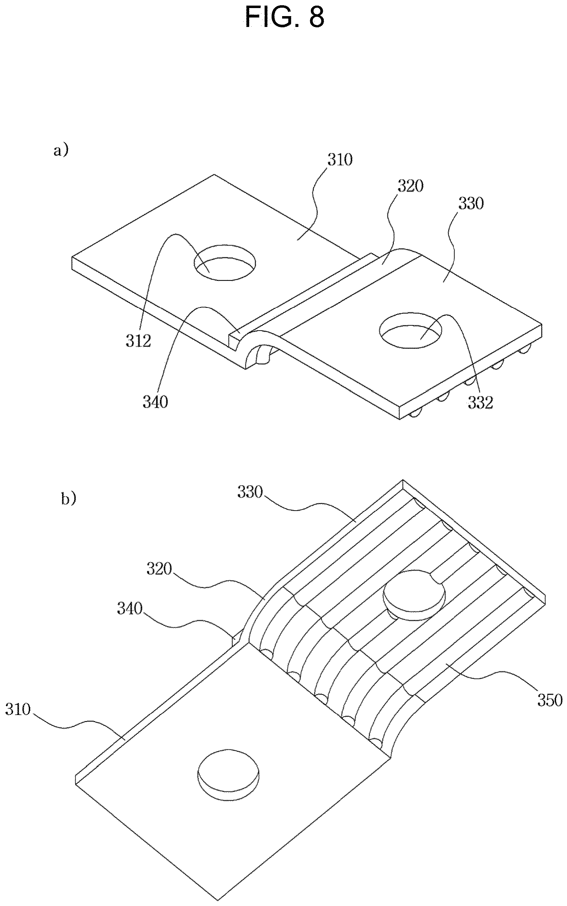

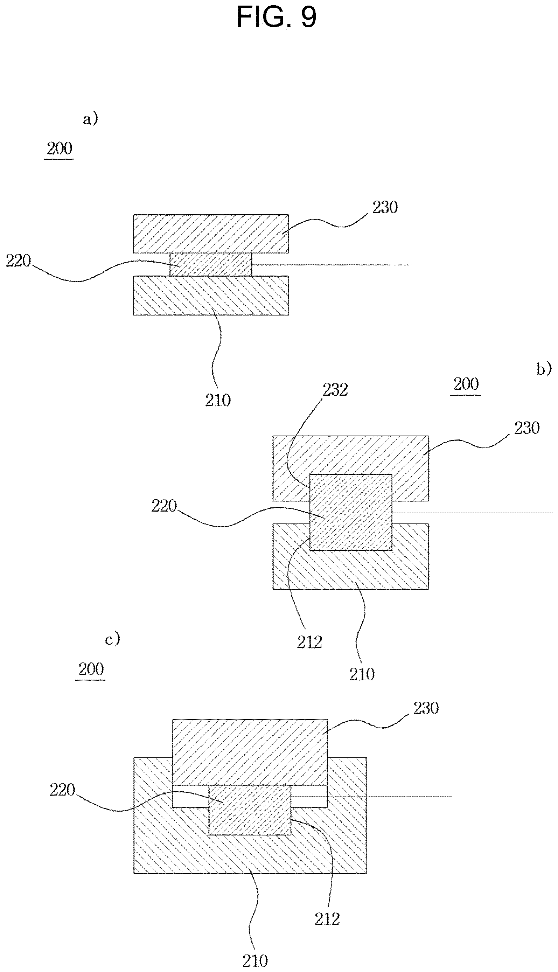

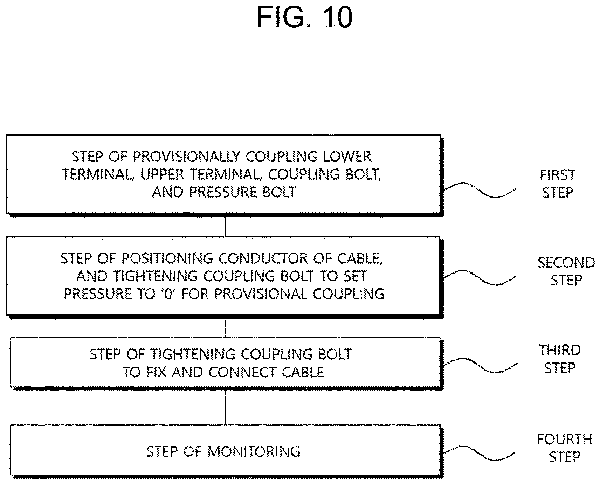

Hereinafter, the present disclosure will be described in detail with reference to FIGS. 1 to 10 showing embodiments of the present disclosure.

First, a pair of terminals, that is, a lower terminal 100 and an upper terminal 300, of the present disclosure are coupled to a base frame 10 of an electronic device via a coupling bolt 400, which will be described later. Between the lower terminal 100 and the upper terminal 300, a conductor (not shown) of a cable 20 of which a jacket is removed is located, and the conductor of the cable is fixed and is electrically connected by the compressive force of the upper terminal 300, that is, by the clamping force of the coupling bolt 400, the upper terminal 300 being moved in the direction of the lower terminal 100 by the coupling bolt 400.

That is, fundamentally, among methods of electrically connecting the cable 20 by fixing the same, the present disclosure relates to a method of fixing the conductor of the cable 20 by compressive force with which the upper terminal 300 is compressed in the direction of the lower terminal 100 by the coupling bolt 400. Herein, it is obvious that the clamping force of the coupling bolt 400 causes compressive force between a terminal and another terminal, specifically, between the upper terminal 300 and the lower terminal 100.

In addition, the base frame 10 of the electronic device mentioned in the present disclosure is provided inside the electronic device and has a space in which the cable is connected. At the base frame 10, an installation hole 12 into which the coupling bolt 400, which will be described later, is coupled by screw-type engagement is formed.

In addition, in the present disclosure, in general, a crimp terminal (not shown) is coupled to the conductor of the cable 20 of which the jacket is stripped to be fixed and coupled to a pair of terminals, but the crimp terminal may not be coupled for quick operation, so it is obvious that the diameter or thickness of the conductor of the cable 20, which will be described later, may correspond to the thickness of the crimp terminal.

The lower terminal 100, which is a main element for achieving the present disclosure, is
provided with a first coupling hole 110 that is formed through the lower terminal 100 on a first side thereof. The first coupling hole 110 corresponds to the installation hole 12 formed in the base frame 10 of the electronic device. The lower terminal 100 is made of a conductor to be electrically connected to the conductor of the cable 20. A thread is formed at the inner circumferential surface of the first coupling hole 110 such that the lower terminal 100 is fixed to the base frame 10 by the coupling bolt 400, which will be described later, being in contact with the base frame 10.

In addition, the lower terminal 100 of the present disclosure is formed extending in length to a second side thereof so that the pressure sensor 200, which will be described later, is provided on the lower terminal 100 on the second side thereof. A coupling hole (not shown) may be formed in the upper surface on the second side so that the lower part of the pressure sensor 200 is mounted therein and coupled thereto, or is coupled thereto by screw-type engagement.

The pressure sensor 200, which is a main element for achieving the present disclosure, has
the lower part mounted on the lower terminal 100 on the second side thereof, or the lower part coupled and fixed thereto as described above. When the pressure bolt 500, which will be described later, is coupled into the fastening hole 332 of the upper terminal 300 by screw-type engagement and is tightened, the upper surface of the pressure sensor 200 is pressed being in contact with the lower surface of the pressure bolt 500, and the pressure generated by the clamping force of the pressure bolt 500 is measured.

In addition, the pressure sensor 200 of the present disclosure transmits measured pressure information to the controller 600, which will be described later, and the controller 600 transmits the pressure information to the display 700, which will be described later, or a user terminal (not shown) so that a user is capable of easily determining the measured pressure.

That is, in the system for measuring terminal connection or disconnection and pressure by using the pressure sensor according to the present disclosure, the pressure information measured by the pressure sensor 200 is easily determined, so a user is capable of easily determining connection or disconnection between the cable 20 and the terminals. When it is determined that the connection is weakened, specifically, when it is determined that the pressure information is lower than preset pressure information, it is easy to perform maintenance, thereby preventing a fire caused by Joule heating.

Specifically, the pressure sensor 200 of the present disclosure may include: a lower insulation 210 of which the lower part is coupled to the upper part of the lower terminal 100 on the second side thereof; a sensor 220 positioned on the lower insulation 210; and an upper insulation 230 coupled above the lower insulation 210 such that the lower surface of the upper insulation 230 is in contact with the sensor 220.

That is, regarding the pressure sensor 200 of the present disclosure, as the upper insulation 230 is pressed by the clamping force of the pressure bolt 500, which will be described later, and the sensor 220 is thus pressed, the sensor 220 measures the pressure. The lower insulation 210 insulates and supports the sensor 220, so that the pressure is more stably measured. Accordingly, it is easily determined connection or disconnection between the cable 20 and the terminals, specifically, whether the clamping force of the coupling bolt 400, which will be described later, is stably formed.

Herein, regarding the detail in which the upper insulation 230 is coupled to the lower insulation 210, it is obvious that the upper insulation 230 is coupled to the lower insulation 210 such that the upper insulation 230 is pressed by the pressure bolt 500, which will be described, and is movable downwards.

Describing the coupling configuration of the lower insulation 210 and the upper insulation 230 in more detail, the lower insulation 210 includes a lower mounting recess 212 in the upper surface thereof, into which the lower part of the sensor 220 is inserted. The lower part of the sensor 220 is inserted into the lower mounting recess 212 and the upper part protrudes. In the meantime, the upper insulation 230 includes an upper mounting recess 232 in the lower surface thereof, into which the upper part of the sensor 220 is inserted. The upper part of the sensor 220 inserted into the upper mounting recess 232 is pressed by the upper insulation 230 pressed by the pressure bolt 500, which will be described later, and the pressure is measured.

Describing another embodiment of the coupling configuration of the lower insulation 210 and the upper insulation 230, the lower insulation 210 includes a lower mounting recess 212 in the upper surface thereof, into which the sensor 220 is completely inserted. The lower part of the upper insulation 230 is inserted into the lower mounting recess 212 and is coupled. Accordingly, as the upper insulation 230 is pressed by the pressure bolt 500, which will be described later, the sensor 220 provided inside the lower mounting recess 212 of the lower insulation 210 is pressed and the pressure is measured.

Herein, regarding the pressure sensor 200 of the present disclosure, it is obvious that the upper insulation 230 is coupled to the lower insulation 210 so as to be lifted up and down. In order to stably lift the upper insulation 230 up and down, a rail groove or a rail may be formed in the lower insulation 210. When the rail groove or the rail is formed in the lower insulation 210, a rail or a rail groove corresponding thereto may be formed in the upper insulation 230.

In connection with the above, since the upper surface of the upper insulation 230 may be damaged by the pressure bolt 500 that is rotated being in contact with the lower surface of the pressure bolt 500, which will be described later, a contact plate (not shown) made of an insulation material having high durability may be further coupled to the upper insulation 230 or the upper insulation 230 may include the contact plate.

The upper terminal 300, which is a main element for achieving the present disclosure, is
provided with a second coupling hole 312 that is formed through the upper terminal 300 on a first side thereof and corresponds to the first coupling hole 110 of the lower terminal 100, and is also provided with a fastening hole 332 that is formed through the upper terminal 300 on a second side thereof, at a position corresponding to the pressure sensor. When the coupling bolt 400, which will be described later, is coupled to the base frame 10 and the first coupling hole 110 described above by screw-type engagement, passing through the second coupling hole 312, the head of the coupling bolt 400 presses the outside of the second coupling hole 312, so that the upper terminal 300 is moved downwards, and accordingly, connection force occurs at the conductor of the cable 20 positioned between the lower terminal 100 and the upper terminal 300.

In addition, after the connection force is generated at the conductor of the cable 20 by the upper terminal 300 and the lower terminal 100 due to the coupling bolt 400, the pressure bolt 500, which will be described later, is coupled into the fastening hole 332 by screw-type engagement, and the clamping force causes pressure to the pressure sensor 200 described above and the pressure is measured.

That is, as the upper terminal 300 of the present disclosure is moved in the direction of the lower terminal 100 by the coupling bolt 400, which will be described later, in another method, the conductor of the cable 20 positioned between the lower terminal 100 and the upper terminal 300 is pressed and the cable 20 is connected. Regarding the pressure measured by the pressure sensor 200, while the lower surface of the upper terminal 300 is in contact with the conductor of the cable 20 by tightening the coupling bolt 400, that is, while the conductor of the cable 20 is fixed with the pressure of 0, the pressure bolt 500 is tightened and the lower surface of the pressure bolt 500 is in contact with the upper surface of the pressure sensor 200. When the pressure bolt 500 is tightened with the pressure of 0, the coupling bolt 400 is tightened again so that the conductor of the cable 20 is firmly fixed. When the pressure sensor 200 measures the pressure caused by the pressure bolt 500, the controller 600, which will be described later, stores initial pressure information.

Furthermore, regarding pressure measurement using the pressure sensor 200 in another method, while the connection force caused by the clamping force formed by the coupling bolt 400 is stably formed, the pressure bolt 500, which will be described later, is coupled into the fastening hole 332 by screw-type engagement, the pressure sensor 200 is pressed by the clamping force, and the pressure sensor 200 measures the pressure. The pressure bolt 500 is sufficiently tightened to form clamping force such that the clamping force is similar to the clamping force formed by the coupling bolt 400 or a pressure preset in the controller 600, which will be described, is reached, and pressure information corresponding to an initial connection force is measured by the pressure sensor 200.

Herein, it is obvious that a thread is not formed at the inner circumferential surface of the second coupling hole 312, so that the coupling bolt 400 passes through and the head of the coupling bolt 400 presses the upper terminal 300 downwards. A thread is formed at the inner circumferential surface of the fastening hole 332 such that the pressure bolt 500 is coupled by screw-type engagement.

Specifically, the upper terminal 300 of the present disclosure may include: a body 310 in which the second coupling hole 312 corresponding to the first coupling hole 110 is formed through the body 310; a bent part 320 formed extending on a side of the body 310 (the second side of the upper terminal) and formed in a shape that is bent upwards in the direction of the second side of the upper terminal; and a separation part 330 formed extending on a side of the bent part 320 (the second side of the upper terminal) in the direction of the second side of the upper terminal, and provided with the fastening hole 332 formed through the separation part 330, at a position corresponding to the pressure sensor 200.

That is, regarding the upper terminal 300 of the present disclosure, the body 310 in which the second coupling hole 312 is formed is pressed downwards by the coupling bolt 400, which will be described later, to connect the conductor of the cable 20 positioned between the lower terminal 100 and the upper terminal 300. The bent part 320 allows the separation part 330 to be sufficiently spaced apart from the upper surface of the lower terminal 100 on the second side, so that the pressure caused by the clamping force of the pressure bolt 500, which will be described later, is generated smoothly.

Herein, it is preferable that the bent part 320 is formed in a shape that is bent upwards in the direction of the second side, namely, a curved shape or an arc shape. This is to ensure that the whole of the separation part 330 is pressed downwards and the pressure caused by the clamping force of the pressure bolt 500 is generated smoothly. Because when the second side of the upper terminal 300, specifically, the separation part 330, is pressed downwards by the pressure bolt 500, which will be described later, the second side of the upper terminal 300, specifically, only the second side of the separation part 330, is pressed downwards by the clamping force caused by the screw-type engagement of the pressure bolt 500.

Furthermore, the upper terminal 330 may further include a first reinforcing bead 340 that is formed at the upper surface between the body 310 and the bent part 320 in order to prevent the bent part 320 from breaking from the body 310 when clamping force is generated by the pressure bolt 500 as described above.

As the pressure bolt 500 is coupled by screw-type engagement, when the lower part of the pressure bolt 500 comes into contact with the upper part of the pressure sensor 200, specifically, the upper surface of the upper insulation 230, the pressure caused by the clamping force is generated. Continuous occurrence of the clamping force may cause a phenomenon that the pressure bolt 500 is not allowed to be moved downwards, the separation part 330 is moved upwards and thus, the bent part 320 bends upwards and may break. The first reinforcing bead 340 minimizes the phenomenon so that the pressure caused by the clamping force of the pressure bolt 500 is more stably formed.

In addition, the upper terminal 300 of the present disclosure may include a plurality of second reinforcing beads 350 formed starting from the lower surface of the bent part 320 to the lower surface of the separation part 330. The second reinforcing bead 350 enables the bent part 320 and the separation part 330 to bend together when clamping force is generated by the pressure bolt 500. Thus, the separation part 330 is prevented from easily breaking from the bent part 320, and simultaneously, the pressure caused by the pressure bolt 500 is stably generated.

The coupling bolt 400, which is a main element for achieving the present disclosure, is
coupled into the installation hole 12 of the base frame 10 by screw-type engagement, passing through the second coupling hole 312 of the upper terminal 300 and the first coupling hole 110 of the lower terminal 100. By the clamping force caused by the screw-type engagement, the upper terminal 300 is pressed downwards, so that the conductor of the cable 20 positioned between the lower terminal 100 and the upper terminal 300 is connected and fixed.

Herein, although it has been described that a thread may be formed at the inner circumferential surface of the first coupling hole 110, since the lower terminal 100 is also pressed together downwards by the conductor of the cable 20 positioned between the lower terminal 100 and the upper terminal 300, it is obvious that a thread does not need to be formed at the inner circumferential surface. In the case in which a thread is formed at the inner circumferential surface, it is preferable that a thread is formed at the inner circumferential surface so that the lower terminal 100 is prevented from moving freely.

That is, as described above, the coupling bolt 400 of the present disclosure is coupled into the installation hole 12 of the base frame 10 by screw-type engagement and thus presses the upper terminal 300 downwards, so that the conductor of the cable 20 positioned between the lower terminal 100 and the upper terminal 300 is pressed by the upper terminal 300 and fixed, thus causing connection force.

Herein, it is obvious that the coupling bolt 400 of the present disclosure has different lengths in which screw-type engagement is made according to the diameter or thickness of the conductor of the cable 20. The pressure bolt 500, which will be described later, also has different lengths in which screw-type engagement is made according to the diameter or thickness of the conductor of the cable 20.

The pressure bolt 500, which is a main element for achieving the present disclosure, is
coupled into the fastening hole 332 of the upper terminal 300 by screw-type engagement to apply pressure to the pressure sensor 200. As the coupling bolt 400 presses and fixes the conductor of the cable 20 to connect the same, the pressure sensor 200 is pressed, and the pressure sensor 200 measures the applied pressure of the pressure bolt 500 and provides pressure information to the controller 600, which will be described later.

Herein, as described above, the pressure bolt 500 of the present disclosure may apply pressure to the pressure sensor 200 in another method. The coupling bolt 400 presses and fixes the conductor of the cable 20 to connect the same, and is coupled by screw-type engagement, and the pressure sensor 200 is thus pressed by the clamping force. The pressure sensor 200 measures the applied pressure caused by the clamping force of the pressure bolt 500 and transmits pressure information to the controller 600. The pressure bolt 500 is tightened until the measured pressure reaches a preset pressure.

That is, the pressure bolt 500 of the present disclosure applies pressure to the pressure sensor 200 as much as an operator uses the coupling bolt 400 to connect the conductor of the cable 20 between the upper terminal 300 and the lower terminal 100. Alternatively, after an operator uses the coupling bolt 400 to connect the conductor of the cable 20 between the upper terminal 300 and the lower terminal 100, the pressure bolt 500 is coupled into the fastening hole 332 of the upper terminal 300 and applies pressure to the pressure sensor 200 as much as a preset pressure.

Describing additionally, it is preferable that after the conductor of the cable 20 is connected between the upper terminal 300 and the lower terminal 100 by using the coupling bolt 400, the pressure bolt 500 of the present disclosure is coupled into the fastening hole 332 of the upper terminal 300 and the pressure bolt 500 applies pressure to the pressure sensor 200 as much as a preset pressure. This is the latter case. This is because, when the pressure bolt 500 applies pressure, the pressure bolt 500 is rotated because of vibration and the pressure may not be applied as much as the preset pressure in the process of additionally tightening the coupling bolt 400.

However, according to the above-described method of tightening the pressure bolt 500 after connecting the conductor of the cable 20 between the upper terminal 300 and the lower terminal 100 by using the coupling bolt 400, it is difficult to form the same pressure as the applied pressure depending on the thickness of the conductor of the cable 20 caused by the coupling bolt 400. In practice, in order to measure the same pressure as the pressure applied to the conductor of the cable 20, provisional coupling is made to set the pressure between the upper terminal 300 and the conductor of the cable 20 and the pressure between the pressure bolt 500 and the pressure sensor 200 to 0, and then the coupling bolt 400 is tightened again, and the pressure sensor 200 measures the pressure caused by the clamping force of the coupling bolt 400, thereby determining the connection force of the conductor of the cable 20 more accurately.

In connection with the above, the system for measuring terminal connection or disconnection and pressure by using the pressure sensor according to the present disclosure may include the controller 600 that receives measured pressure information from the pressure sensor 200, specifically, is connected to the sensor 220 and receives the measured pressure information from the sensor 200.

Describing additionally, after the pressure between the upper terminal 300 and the conductor of the cable 20 and the pressure between the pressure bolt 500 and the pressure sensor 200 are set to 0, the controller 600 receives pressure information the same as the pressure of connecting the conductor of the cable 20 by tightening the coupling bolt 400, from the pressure sensor 200. Alternatively, after the conductor of the cable 20 is connected by tightening the coupling bolt 400, the pressure bolt 500 is tightened until the preset pressure is applied, and the controller 600 receives pressure information from the pressure sensor 200.

The controller 600 transmits the received pressure information to the display 700, which will be described later, or stores the preset pressure information therein. When the measured pressure, namely, the pressure information, is out of an error range of the initial pressure information or out of an error range of the preset pressure information, the controller 600 transmits warning information to the display 700 or a user terminal so that the user or operator is capable of easily determining terminal connection or disconnection.

Herein, it is obvious that the controller 600 includes a wireless communication part for transmitting the pressure information or warning information to a user terminal (e.g., a portable device).

That is, the system for measuring terminal connection or disconnection and pressure by using the pressure sensor according to the present disclosure may further include a user terminal, such as a portable device, etc., for receiving the pressure information or warning information from the controller 600 and displaying the same to the user or operator.

In addition, the system for measuring terminal connection or disconnection and pressure by using the pressure sensor according to the present disclosure may include the display 700 for receiving pressure information from the controller 600 and displaying the pressure information.

The display 700 may receive the measured pressure information and preset stored pressure information from the controller 600 and may display the information selectively. When the measured pressure information is out of an error range of initially measured pressure information or preset pressure information, different lighting or color is displayed, whereby the user or operator is capable of easily determining terminal connection or disconnection.

Herein, the controller 600 may be provided inside the electronic device, and the display 700 may be provided at the outside of the electronic device or provided separately. In the case in which the display 700 is separately provided, when necessary, the user or operator connects the display to the controller 600 and determines terminal connection or disconnection, that is, measured pressure information.

In the meantime, the system for measuring terminal connection or disconnection and pressure by using the pressure sensor according to the present disclosure may further include a position detection sensor (not shown) that is provided at the upper surface of the upper terminal 300, measures the rotation amount of the coupling bolt 400, and transmits measured rotation amount information to the controller 600.

The position detection sensor is provided on the first side or the second side at the upper surface of the upper terminal 300, is connected to the controller 600, and generates rotation amount information of the coupling bolt 400. Accordingly, the controller 600 calculates the pressure generated by one rotation of the coupling bolt 400 and transmits applied pressure information to the display 700 or the user terminal. After determining the applied pressure information, the operator or user easily rotates the coupling bolt 400 as much as needed so as to apply pressure, thereby facilitating maintenance.

Herein, the upper part or the whole of the upper insulation 230 may be made of a transparent material, and it is preferable that the above-described contact plate is made of a transparent material.

Hereinafter, described will be Embodiment 1 and Embodiment 2 of a method for measuring terminal connection or disconnection and pressure by using the system for measuring terminal connection or disconnection and pressure by using the pressure sensor described above.

Embodiment 1 is a method of tightening the pressure bolt 500 in advance so that the pressure corresponding to the clamping force caused by the coupling bolt 400 is generated.

First, in a first step, the lower terminal 100 is positioned on the base frame 10 of the electronic device, the upper terminal 300 is provisionally coupled above the lower terminal 100 by using the coupling bolt 400, and the pressure bolt 500 is provisionally coupled to the upper terminal 300.

In a second step after the first step, the conductor of the cable 20 is positioned between the lower terminal 100 and the upper terminal 300, and the coupling bolt 400 is tightened such that the pressure applied to the conductor of the cable 20 by the clamping force of the coupling bolt 400 is 0, in other words, the upper terminal 300 is in contact with the conductor of the cable 20. In addition, the pressure bolt 500 is tightened to cause the lower part of the pressure bolt 500 to be in contact with the upper part of the pressure sensor 200 such that the pressure applied to the pressure sensor 200 is 0.

That is, the second step corresponds to a pressure measurement preparation step of setting the pressure between the upper terminal 300 and the conductor of the cable 20 and the pressure between the pressure bolt 500 and the pressure sensor 200 to 0.

In a third step after the second step, the coupling bolt 400 is tightened to fix the conductor of the cable 20 between the lower terminal 100 and the upper terminal 300 and connect the conductor of the cable 20, wherein the coupling bolt 400 is tightened such that the pressure caused by the pressure bolt 500 measured by the pressure sensor 200 reaches a preset pressure.

That is, in the third step, the pressure corresponding to the clamping force caused by the coupling bolt 400 is applied to the pressure sensor 200 by the pressure bolt 500, and the pressure of connecting the conductor of the cable 20 may be measured.

In a fourth step after the third step, terminal connection or disconnection, that is, measured pressure information from the controller 600, is continuously monitored through the display 700 or the user terminal, and the coupling bolt 400 is tightened again when maintenance is required.

Embodiment 2 is a method of generating a similar pressure corresponding to the clamping force caused by the coupling bolt 400, specifically, enabling the pressure sensor 200 to be pressed by the pressure bolt 500 with a preset pressure according to the diameter or thickness of the conductor of the cable 20.

First, in a first step, the lower terminal 100 is positioned on the base frame 10 of the electronic device to prepare for later coupling by the coupling bolt 400.

In a second step after the first step, the upper terminal 300 is positioned above the lower terminal 100, and the coupling bolt 400 is first tightened and coupled into the installation hole 12 of the base frame 10 by screw-type engagement passing through the first coupling hole 110 of the lower terminal 100 and the second coupling hole 312 of the upper terminal 300, so that the lower terminal 100 and the upper terminal 300 are provisionally coupled.

Herein, in the second step, the upper terminal 300 is movable upwards and downwards by the coupling bolt 400.

In a third step after the second step, the upper terminal 300 is spaced apart from the lower terminal 100 and then the conductor of the cable 20 is positioned on one side between the lower terminal 100 and the upper terminal 300, and the coupling bolt 400 is second tightened to fix the conductor of the cable 20 between the lower terminal 100 and the upper terminal 300. Herein, the coupling bolt 400 is tightened and connected so that the conductor of the cable 20 is firmly fixed by the upper terminal 300 and the lower terminal 100.

In a fourth step, the pressure bolt 500 is tightened and coupled into the fastening hole 332 of the upper terminal 300 by screw-type engagement, wherein the pressure bolt 500 is tightened and coupled by screw-type engagement while the display 700 is checked until the preset pressure stored in the controller 600 is applied to the pressure sensor 200. While the cable 20 is connected by the clamping force of the coupling bolt 400, the pressure bolt 500 is tightened until the preset pressure is applied, and the connection state of the cable 20 is determined.

In a fifth step after the fourth step, terminal connection or disconnection, that is, measured pressure information from the controller 600, is continuously monitored through the display 700 or the user terminal, and the coupling bolt 400 is tightened again when maintenance is required.

In conclusion, according to the system for measuring terminal connection or disconnection and pressure by using the pressure sensor and the method for measuring terminal connection or disconnection and pressure according to the present disclosure, the conductor of the cable 20 is connected by using the lower terminal 100, the upper terminal 300, and the coupling bolt 400, and then the pressure bolt 500 and the pressure sensor 200 are used to easily determine the connected state of the conductor of the cable 20 and enable maintenance, thereby preventing a fire caused by Joule heating due to the loose connection between the conductor of the cable 20 and the terminals.

## Claims

1. A system for measuring terminal connection or disconnection and pressure by using a pressure sensor, the system comprising:
a lower terminal (100) through which a first coupling hole (110) is formed on a first side thereof, the first coupling hole (110) corresponding to an installation hole (12) formed in a base frame (10) of an electronic device;
the pressure sensor (200) of which a lower part is coupled to an upper part of the lower terminal (100) on a second side thereof;
an upper terminal (300) through which a second coupling hole (312) is formed on a first side thereof, the second coupling hole (312) corresponding to the first coupling hole (110);
a coupling bolt (400) coupled into the installation hole (12) of the base frame (10) by screw-type engagement, passing through the second coupling hole (312) of the upper terminal (300) and the first coupling hole (110) of the lower terminal (100);
**characterised in that**,
the upper terminal (300) has a fastening hole (332) formed on a second side thereof, the fastening hole (332) being at a position corresponding to the pressure sensor (200); and
a pressure bolt (500) coupled into the fastening hole (332) of the upper terminal (300) by screw-type engagement, and configured to apply pressure to the pressure sensor (200).

2. The system of claim 1, further comprising a controller (600) configured to receive pressure information measured from the pressure sensor (200).

3. The system of claim 2, further comprising a display (700) configured to receive the pressure information from the controller (600) and display the pressure information.

4. The system of claim 1, wherein the upper terminal (300) comprises:
a body (310) through which the second coupling hole (312) corresponding to the first coupling hole(110) is formed;
a bent part (320) formed extending on a side of the body (310) and formed in a shape bent upwards in a direction of the side; and
a separation part (330) formed extending on a side of the bent part (320) in a direction of the side, and provided with the fastening hole (332) that is formed at the position corresponding to the pressure sensor (200) and through the separation part (330).

5. The system of claim 4, wherein the upper terminal (300) comprises a first reinforcing bead (340) formed thereon between the body (310) and the bent part (320).

6. The system of claim 5, wherein the upper terminal (300) comprises a plurality of second reinforcing beads (350) formed starting from a lower surface of the bent part (320) to a lower surface of the separation part (330).

7. The system of claim 1, wherein the pressure sensor (200) comprises:
a lower insulation (210) of which a lower part is coupled to the upper part of the lower terminal (100) on the second side thereof; a sensor (220) positioned on the lower insulation (210); and
an upper insulation (230) coupled above the lower insulation (210) such that a lower surface of the upper insulation (230) is in contact with the sensor (220).

8. The system of claim 7, wherein the lower insulation (210) is provided with a lower mounting recess (212) in an upper surface thereof, into which a lower part of the sensor (220) is inserted, and
the upper insulation (230) is provided with an upper mounting recess (232) in the lower surface thereof, into which an upper part of the sensor (220) is inserted.

9. The system of claim 7, wherein the lower insulation (210) is provided with a lower mounting recess (212) in an upper surface thereof, into which the sensor (220) is inserted, and
the upper insulation (230) is coupled as a lower part thereof is inserted into the lower mounting recess (212).

10. A method for measuring terminal connection or disconnection and pressure by using the system for measuring terminal connection or disconnection and pressure by using the pressure sensor according to any one of claims 1 to 9, the method comprising:
a first step in which the lower terminal (100) is positioned on the base frame (10) of the electronic device, the upper terminal (300) is provisionally coupled above the lower terminal (100) by using the coupling bolt (400), and the pressure bolt (500) is provisionally coupled to the upper terminal (300);
after the first step, a second step in which a conductor of a cable (20) is positioned between the lower terminal (100) and the upper terminal (300), the coupling bolt (400) is tightened to cause the upper terminal (300) to be in contact with the conductor of the cable (20) such that pressure applied to the conductor of the cable (20) by clamping force of the coupling bolt (400) is 0, and the pressure bolt (500) is tightened to cause a lower part of the pressure bolt (500) to be in contact with an upper part of the pressure sensor (200) such that pressure applied to the pressure sensor (200) is 0; and
after the second step, a third step in which the coupling bolt (400) is tightened to fix the conductor of the cable (20) between the lower terminal (100) and the upper terminal (300), wherein the coupling bolt (400) is tightened such that pressure caused by the pressure bolt (500) measured by the pressure sensor (200) reaches a preset pressure.

## Patentansprüche

1. System zum Messen der Verbindung oder Trennung von Anschlüssen und des Drucks unter Verwendung eines Drucksensors, wobei das System umfasst:
einen unteren Anschluss (100), durch den auf einer ersten Seite desselben ein erstes Kupplungsloch (110) ausgebildet ist, wobei das erste Kupplungsloch (110) einem in einem Basisrahmen (10) einer elektronischen Vorrichtung ausgebildeten Installationsloch (12) entspricht;
dessen Drucksensor (200) mit einem unteren Teil an einen oberen Teil des unteren Anschlusses (100) auf einer zweiten Seite davon gekoppelt ist;
ein oberes Anschlussstück (300), durch den ein zweites Kopplungsloch (312) auf einer ersten Seite davon gebildet ist, wobei das zweite Kopplungsloch (312) dem ersten Kopplungsloch (110) entspricht;
einen Kupplungsbolzen (400), der durch schraubenartigen Eingriff in das Installationsloch (12) des Basisrahmens (10) gekuppelt ist und durch das zweite Kupplungsloch (312) des oberen Anschlusses (300) und das erste Kupplungsloch (110) des unteren Anschlusses (100) hindurchgeht;
**dadurch gekennzeichnet, dass**
das obere Anschlussstück (300) ein Befestigungsloch (332) aufweist, das auf einer zweiten Seite davon ausgebildet ist, wobei sich das Befestigungsloch (332) an einer Position befindet, die dem Drucksensor (200) entspricht; und
ein Druckbolzen (500) durch schraubenartigen Eingriff in das Befestigungsloch (332) des oberen Anschlussstücks (300) gekoppelt ist und so konfiguriert ist, dass er Druck auf den Drucksensor (200) ausübt.

2. System nach Anspruch 1, das ferner eine Steuerung (600) umfasst, die so konfiguriert ist, dass sie vom Drucksensor (200) gemessene Druckinformationen empfängt.

3. System nach Anspruch 2, das ferner eine Anzeige (700) umfasst, die so konfiguriert ist, dass sie die Druckinformationen von der Steuerung (600) empfängt und die Druckinformationen anzeigt.

4. System nach Anspruch 1, wobei das obere Anschlussstück (300) umfasst:
einen Körper (310), durch den das zweite Kupplungsloch (312) ausgebildet ist, das dem ersten Kupplungsloch (110) entspricht;
ein gebogenes Teil (320), das so ausgebildet ist, dass es sich auf einer Seite des Körpers (310) erstreckt und in einer Form ausgebildet ist, die in Richtung der Seite nach oben gebogen ist; und
ein Trennteil (330), das sich auf einer Seite des gebogenen Teils (320) in Richtung der Seite erstreckt und mit dem Befestigungsloch (332) versehen ist, das an der Position, die dem Drucksensor (200) entspricht, und durch das Trennteil (330) ausgebildet ist.

5. System nach Anspruch 4, wobei das obere Anschlussstück (300) eine erste Verstärkungswulst (340) umfasst, die daran zwischen dem Körper (310) und dem gebogenen Teil (320) ausgebildet ist.

6. System nach Anspruch 5, wobei das obere Anschlussstück (300) eine Vielzahl von zweiten Verstärkungswülsten (350) umfasst, die von einer unteren Fläche des gebogenen Teils (320) zu einer unteren Fläche des Trennteils (330) hin ausgebildet sind.

7. System nach Anspruch 1, wobei der Drucksensor (200) umfasst:
eine untere Isolierung (210), von der ein unterer Teil mit dem oberen Teil des unteren Anschlusses (100) auf dessen zweiter Seite verbunden ist; einen Sensor (220), der auf der unteren Isolierung (210) positioniert ist; und
eine obere Isolierung (230), die über der unteren Isolierung (210) so verbunden ist, dass eine untere Fläche der oberen Isolierung (230) mit dem Sensor (220) in Kontakt ist.

8. System nach Anspruch 7, wobei die untere Isolierung (210) mit einer unteren Montageaussparung (212) in einer oberen Fläche davon versehen ist, in die ein unterer Teil des Sensors (220) eingesetzt ist, und
die obere Isolierung (230) mit einer oberen Montageaussparung (232) in der unteren Fläche davon versehen ist, in die ein oberer Teil des Sensors (220) eingesetzt ist.

9. System nach Anspruch 7, wobei die untere Isolierung (210) mit einer unteren Montageaussparung (212) in einer oberen Fläche davon versehen ist, in die der Sensor (220) eingesetzt ist, und
die obere Isolierung (230) gekoppelt wird, wenn ein unterer Teil davon in die untere Montageaussparung (212) eingesetzt wird.

10. Verfahren zum Messen einer Anschlussverbindung oder -trennung und eines Drucks unter Verwendung des Systems zum Messen einer Anschlussverbindung oder - trennung und eines Drucks unter Verwendung des Drucksensors gemäß einem der Ansprüche 1 bis 9, wobei das Verfahren Folgendes umfasst:
einen ersten Schritt, in dem der untere Anschluss (100) auf dem Basisrahmen (10) der elektronischen Vorrichtung positioniert wird, das obere Anschlussstück (300) provisorisch über dem unteren Anschluss (100) unter Verwendung des Kupplungsbolzens (400) gekoppelt wird und der Druckbolzen (500) provisorisch mit dem oberen Anschlussstück (300) gekoppelt wird;
Nach dem ersten Schritt, einem zweiten Schritt, in dem ein Leiter eines Kabels (20) zwischen dem unteren Anschluss (100) und dem oberen Anschlussstück (300) positioniert wird, wird der Kupplungsbolzen (400) festgezogen, um zu bewirken, dass das obere Anschlussstück (300) mit dem Leiter des Kabels (20) in Kontakt steht, so dass der Druck, der durch die Klemmkraft des Kupplungsbolzens (400) auf den Leiter des Kabels (20) durch die Klemmkraft des Kupplungsbolzens (400) 0 ist, und der Druckbolzen (500) festgezogen wird, um zu bewirken, dass ein unterer Teil des Druckbolzens (500) mit einem oberen Teil des Drucksensors (200) in Kontakt ist, so dass der auf den Drucksensor (200) ausgeübte Druck 0 ist; und
nach dem zweiten Schritt ein dritter Schritt, in dem der Kupplungsbolzen (400) festgezogen wird, um den Leiter des Kabels (20) zwischen dem unteren Anschluss (100) und dem oberen Anschluss (300) zu befestigen, wobei der Kupplungsbolzen (400) so festgezogen wird, dass der durch den Druckbolzen (500) verursachte Druck, der durch den Drucksensor (200) gemessen wird, einen voreingestellten Druck erreicht.

## Revendications

1. Système de mesure de la connexion ou de la déconnexion d'un terminal et de la pression à l'aide d'un capteur de pression, le système comprenant :
un terminal inférieur (100) à travers lequel un premier trou de couplage (110) est formé sur un premier côté, le premier trou de couplage (110) correspondant à un trou d'installation (12) formé dans un cadre de base (10) d'un appareil électronique ;
le capteur de pression (200) dont une partie inférieure est couplée à une partie supérieure de la borne inférieure (100) sur un deuxième côté ;
un terminal supérieur (300) à travers lequel un deuxième trou de couplage (312) est formé sur un premier côté, le deuxième trou de couplage (312) correspondant au premier trou de couplage (110) ;
un boulon de couplage (400) couplé dans le trou d'installation (12) du cadre de base (10) par engagement de type vis, passant à travers le second trou de couplage (312) de la borne supérieure (300) et le premier trou de couplage (110) de la borne inférieure (100) ;
**caractérisé par le fait que**
le terminal supérieur (300) comporte un trou de fixation (332) formé sur son deuxième côté, le trou de fixation (332) se trouvant à une position correspondant au capteur de pression (200) ; et
un boulon de pression (500) couplé au trou de fixation (332) du terminal supérieur (300) par engagement de type vis, et configuré pour appliquer une pression au capteur de pression (200).

2. Le système de la revendication 1, comprenant en outre un contrôleur (600) configuré pour recevoir des informations sur la pression mesurée par le capteur de pression (200).

3. Le système de la revendication 2, comprenant en outre un écran (700) configuré pour recevoir les informations de pression du contrôleur (600) et afficher les informations de pression.

4. Le système de la revendication 1, dans lequel le terminal supérieur (300) comprend :
un corps (310) à travers lequel est formé le second trou de couplage (312) correspondant au premier trou de couplage (110) ;
une partie courbée (320) s'étendant sur un côté du corps (310) et ayant une forme courbée vers le haut dans la direction du côté ; et
une partie de séparation (330) s'étendant sur un côté de la partie pliée (320) dans une direction latérale, et pourvue d'un trou de fixation (332) formé à la position correspondant au capteur de pression (200) et à travers la partie de séparation (330).

5. Le système de la revendication 4, dans lequel le terminal supérieur (300) comprend un premier bourrelet de renforcement (340) formé entre le corps (310) et la partie pliée (320).

6. Le système de la revendication 5, dans lequel le terminal supérieur (300) comprend une pluralité de secondes billes de renforcement (350) formées à partir d'une surface inférieure de la partie courbée (320) jusqu'à une surface inférieure de la partie de séparation (330).

7. Le système de la revendication 1, dans lequel le capteur de pression (200) comprend :
un isolant inférieur (210) dont une partie inférieure est couplée à la partie supérieure du terminal inférieur (100) sur son deuxième côté ; un capteur (220) positionné sur l'isolant inférieur (210) ; et
une isolation supérieure (230) couplée au-dessus de l'isolation inférieure (210) de telle sorte qu'une surface inférieure de l'isolation supérieure (230) soit en contact avec le capteur (220).

8. Le système de la revendication 7, dans lequel l'isolation inférieure (210) est pourvue d'une cavité de montage inférieure (212) dans sa surface supérieure, dans laquelle une partie inférieure du capteur (220) est insérée, et
l'isolation supérieure (230) est pourvue d'une cavité de montage supérieure (232) sur sa surface inférieure, dans laquelle une partie supérieure du capteur (220) est insérée.

9. Le système de la revendication 7, dans lequel l'isolation inférieure (210) est pourvue d'une cavité de montage inférieure (212) dans sa surface supérieure, dans laquelle le capteur (220) est inséré, et
l'isolation supérieure (230) est couplée lorsqu'une partie inférieure de celle-ci est insérée dans l'évidement de montage inférieur (212).

10. Méthode de mesure de la connexion ou de la déconnexion des bornes et de la pression à l'aide du système de mesure de la connexion ou de la déconnexion des bornes et de la pression à l'aide du capteur de pression selon l'une quelconque des revendications 1 à 9, la méthode comprenant :
une première étape au cours de laquelle le terminal inférieur (100) est positionné sur le cadre de base (10) du dispositif électronique, le terminal supérieur (300) est provisoirement couplé au-dessus du terminal inférieur (100) à l'aide du boulon de couplage (400), et le boulon de pression (500) est provisoirement couplé au terminal supérieur (300) ;
après la première étape, une deuxième étape dans laquelle un conducteur d'un câble (20) est positionné entre la borne inférieure (100) et la borne supérieure (300), le boulon d'accouplement (400) est serré pour que la borne supérieure (300) soit en contact avec le conducteur du câble (20) de telle sorte que la pression appliquée au conducteur du câble (20) par la force de serrage du boulon d'accouplement (400) soit de 0, et le boulon de pression (500) est serré pour qu'une partie inférieure du boulon de pression (500) soit en contact avec une partie supérieure du capteur de pression (200) de sorte que la pression appliquée au capteur de pression (200) soit égale à 0 ; et
après la deuxième étape, une troisième étape au cours de laquelle le boulon d'accouplement (400) est serré pour fixer le conducteur du câble (20) entre la borne inférieure (100) et la borne supérieure (300), le boulon d'accouplement (400) étant serré de manière à ce que la pression causée par le boulon de pression (500), mesurée par le capteur de pression (200), atteigne une pression prédéfinie.
